# EUROPEAN PATENT APPLICATION

(11) **EP 4 549 137 A1**
(43) Date of publication of application: **07.05.2025**
(21) Application number: 23306904.6
(22) Date of filing: 03.11.2023
(51) Int. Cl.: B29D 11/00

(54) **METHOD FOR MANUFACTURING AN OPTICAL ARTICLE**

(71) Applicant: Essilor International, 94220 Charenton-Le-Pont (FR)
(72) Inventor: CASTRO MARTINEZ, Luis, 94100 SAINT MAUR DES FOSSES (FR); MARCHAL, Jeanne, 75011 PARIS (FR)
(74) Representative: Jacobacci Coralis Harle

(57) **Abstract**

The invention relates to a method for manufacturing an optical article (30), comprising steps:
S1) of providing at least two distinct parts (10), each one having two end faces (11, 12),
S2) of assembling said at least two parts so that their end faces (11, 12) form main faces (21, 22) for the assembling (20) of parts, and
S3) of machining at least one of said main faces to generate at least one optical face for the optical article.

## Description

### TECHNICAL FIELD OF THE INVENTION

The present invention generally relates to the field of eyeglasses.

It more particularly relates to a method for manufacturing an optical article such as an ophthalmic lens to be mounted in a spectacle frame.

### BACKGROUND INFORMATION AND PRIOR ART

A traditional method for manufacturing an ophthalmic lens consists in:
- providing two molding shells at the periphery of which is disposed an annular closure member (such as a tape), which member defining with these shells a molding cavity,
- molding a lens blank by filling this molding cavity with a monomer and by polymerizing this polymer,
- machining both surfaces of this blank to obtain a lens that fulfills the optical function for which it has been designed.

The two molding shells are used to mold several lens blanks and therefore to manufacture lenses of distinct shapes.

The difference of shapes between the lens blank and the obtained machined lens is generally great. Indeed, the blank must have a sufficiently large thickness so as to be used to manufacture lenses of various shapes.

In other words, a lot of material is needed to mold lens blanks. And a large amount of material has to be removed during the machining step. It is not uncommon that the weight of the lens blank is 5 times greater than the weight of the finished lens.

This problem could be avoided with smaller blanks, but this solution would require a large number of molding shells of distinct shapes, that would not be, in practice, manageable.

### SUMMARY OF THE INVENTION

In this context, the present invention provides a new method for manufacturing an optical article that minimizes the required volume of manufacturing material and the volume of material to be removed during the machining step.

More precisely, the invention relates to a method for manufacturing an optical article, comprising steps:
S1) of providing at least two distinct parts, each one having two end faces,
S2) of assembling said at least two parts so that their end faces form main faces for the assembling of parts (i.e. the lens blank), and
S3) of machining at least one of said main faces to generate at least one optical face for the optical article.

Consequently, the lens blank is not formed of a single piece by molding, but from separate pieces that are assembled edge-to-edge. Therefore, each piece can be designed so as to have the smallest possible dimensions.

As a result, thanks to the invention, the amount of material required to generate the lens blank is much less than that required for molding a lens blank in a single piece, which is cost effective and environmentally friendly. Moreover, the amount of material to be removed during the machining step is also reduced, so that this step can be carried out more quickly and at a lower cost because the used tools are less damaged.

Other preferred features of the invention are the following ones:
- step S3) comprises the machining of both main faces to generate two optical faces for the optical article;
- said step S2) of assembling comprises a positioning of said at least two parts relative to each other and a bonding of said at least two parts;
- said at least two parts are made of a material having a first refraction index and are bonded by means of a glue having a second refraction index, a ratio between said second and first refraction indexes lying between 83% and 100%;
- in a variant, said at least two parts are bonded by fusion.
- the end faces of each part are parallel;
- said two parts have distinct lengths, each length being measured between the end faces of the part;
- said step S1) of providing comprises a sub-step S11) of calculating a length for each part as a function of a desired shape for the optical faces of the optical article;
- each length is calculated so that at least one point of each end face of the part is located on one of the optical faces of the optical article, or at a distance from it that is fewer than a predetermined threshold;
- at least two parts have identical cross-sections, in a plane orthogonal to an axis passing through both end faces of one of said parts;
- all parts have identical cross-sections;
- said at least two parts have distinct cross-sections, in a plane orthogonal to an axis passing through both end faces of one of said parts;
- one part has a circular shape and at least one another part has an annular shape;
- one part has a recess, and another part has a protrusion that is engaged into said recess during said step S2) of assembling;
- said step S1) of providing comprises a sub-step S12) of manufacturing at least one part by additive manufacturing or by molding or by cutting a template;
- said at least two parts have distinct refraction indexes;
- said optical article is an ophthalmic lens;
- said at least two parts perform distinct optical functions. For instance, one of these parts may comprises microlenses (such as those described in document WO2019166654), diffusing/scattering surface or elements, specific coating or color filtering.

The invention also relates to an optical article with two optical faces and comprising at least two distinct and assembled parts, each part having two end faces, the end faces of the parts forming said optical faces.

### DETAILED DESCRIPTION OF EXAMPLE(S)

The following description with reference to the accompanying drawings, given by way of non-limiting example makes it clear what the invention consists in and how it can be reduced to practice.

In the accompanying drawings:
- Figure 1 is a schematic view of a lens blank and of a lens manufactured thanks to the invention;
- Figure 2 is a schematic front view of the lens blank of Figure 1 and of a variant of this lens blank;
- Figure 3 is graphic showing the cross-section of the lens blank, superposed to the manufactured lens of figure 1;
- Figure 4 is a schematic front view of pieces of another variant of the lens blank of Figure 1;
- Figure 5 is a schematic view of another variant of the lens blank of Figure 1;
- Figure 6 is a schematic view of another variant of the lens blank of Figure 1;
- Figure 7 is a diagram illustrating the process according to the invention.

### Process

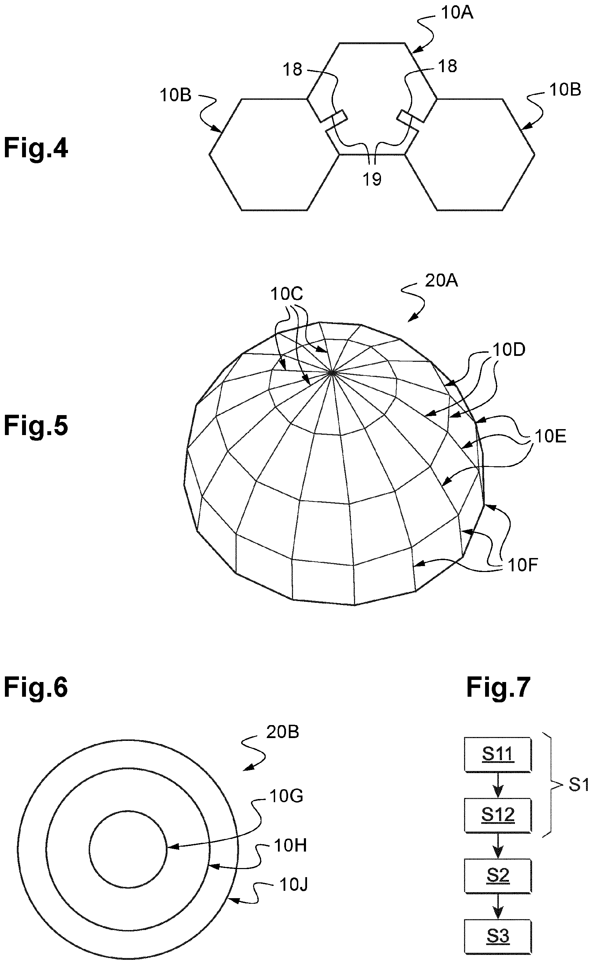

Fig. 7 illustrates a method for manufacturing an optical article 30.

This optical article 30 may be of any shape.

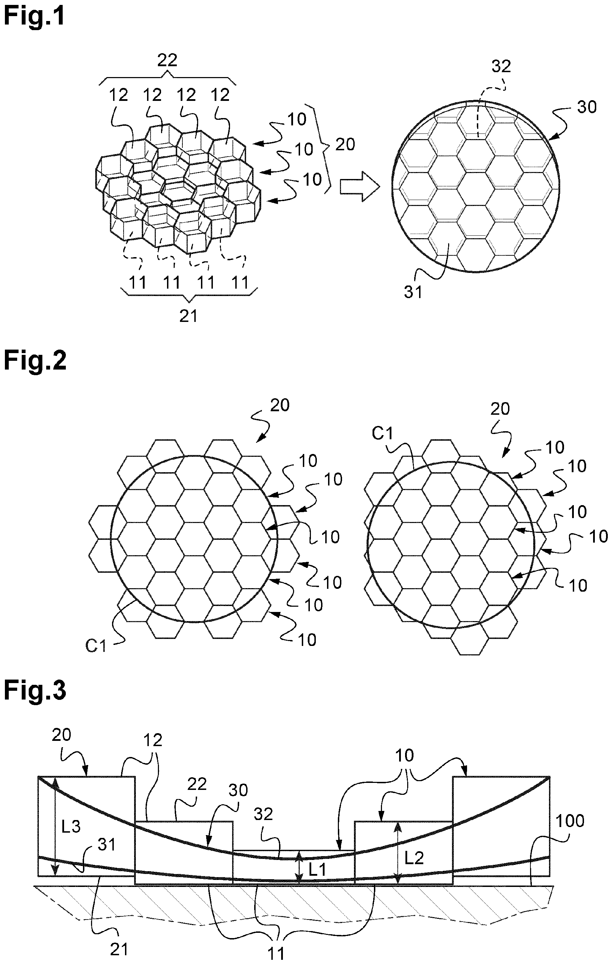

In the embodiment shown in the right part of Figure 1, it is an ophthalmic lens such as a single vision lens, or a myopia control lens, or a progressive addition lens, or a bifocal or trifocal lens. This lens is suitable to be mounted in a rim of an eyeglass frame. But in a variant, the optical article 30 could be a sunglass lens (tinted or not, polarized or not), a lens suitable for being mounted in a goggle, a lens for an optic device (a microscope lens, a telescope lens) ...

The manufacturing process according to the invention comprises three main steps.

The first step S1) consists in providing at least two distinct pieces (named hereinafter "lens blank part 10" or "part 10"), each one having a lateral face and two end faces 11, 12.

The second step S2) consists in assembling said at least two lens blank parts 10 (the assembly being named hereinafter a "lens blank 10") so that their end faces 11, 12 form the lens blank main faces 21, 22. At this step, the parts 10 are assembled edge-to-edge by their lateral faces.

The third step S3) consists in machining the one and/or the other of said main faces 21, 22 to generate the optical faces of the optical article 30.

Various embodiments are possibles.

We can first detail these steps by describing a first embodiment of the invention, on the basis of Figs. 1 to 3.

### - S1

In this embodiment, the first step S1 consists in providing several distinct parts 10 elongated along main axes A1.

In one embodiment, all the parts have the same refractive index. They are all formed of a same material.

In a preferred embodiment, each part 10 has a cross-section (in a section plane orthogonal to the main axis A1) that has a constant shape whatever the section plane along the main axes A1. In other words, all the parts 10 have a cylindrical lateral surface.

The end faces 11, 12 of each part 10 are here flat and orthogonal to the main axis A1 of this part.

At least two of these parts 10 have identical cross-sections.

In the shown embodiment, they all have identical cross-sections. These cross sections all have a regular hexagon shape.

Consequently, each part can be surrounded by six other identical parts 10.

As clearly shown in the left view of Figure 2, there is a central part 10 surrounded of six first parts, twelve second parts surrounding these first parts, and twelve last parts distributed around the second parts. In other words, the parts (except the central one) are distributed along coaxial circles of distinct diameters.

The number of used parts depends on the diameter of the optical article 30 to be manufactured. This number is chosen to be as low as possible.

It is for this purpose that, in the right view of this same Figure 2, the different parts are distributed differently. In this configuration, there are three central parts and the other parts are distributed in layers around these three central parts.

The objective in both cases is that the parts, once assembled by their lateral faces, form an assembly (the lens blank 20) covering a circular surface, without any opening. The circle C1 delimiting this surface corresponds here to the diameter of the optical article 30 to be manufactured.

In the following, the parts 10 will be considered as being installed on a flat support 100 during their assembly, next to each other, such that their main axes A1 extend vertically and such that the front main face 21 of the lens blank 20 bears against the support 10 (see Fig.3).

The notion of "height" will therefore be used below to define the distance separating a point, an axis or a plane, from the support 100.

The various parts 10 could have identical lengths and be distributed at different heights relative to the support 100.

However, preferably, at least two of the parts 10 have distinct lengths. The objective is in fact to ensure that the lens blank 20 presents the shape as close as possible to that of the optical article 30 after machining.

Consequently, step S1 comprises a first sub-step S11 for calculating an ideal length for each part 10, and a sub-step S12 for manufacturing these parts.

In Figure 3, there is shown in section a view of a part of the lens blank 20 (with its two main faces 21, 22), virtually superimposed to a view of a part of the optical article 30 after machining (with its two optical faces 31, 32).

This figure shows a central part 10 of length L1, two neighbouring parts 10 of lengths L2 located on each side of the central part 10, and two peripheral parts 10 of lengths L3.

We observe that if the lower end faces 11 of the central and neighbouring parts 10 are located at the same height from the support 100, the same is not true for the lower end faces of the peripheral parts, which are offset upwards. To this end, shims of desired heights could be inserted between these lower end faces 11 and the support 100.

Of course, to facilitate the manufacture of the lens blank, all the lower end faces could all be arranged at the same height. Thus, for the assembly of the parts 10, the parts could be put directly on the flat support 100. But this variant is not preferred since it would require a larger amount of material to manufacture the optical article 30.

It is further observed in figure 3 that the upper end faces 12 of the central, neighbouring and peripheral parts are all located at different heights.

Substep S11 therefore includes an operation for acquiring the 3D shapes of the optical faces 31, 32 of the optical article 30.

It then includes an operation of virtual distribution of the parts 10 in relation to this 3D shape, to minimize the number of parts necessary for the manufacture of the optical article 30 (as explained above on the basis of figure 2).

It also includes a step of calculating the length L1, L2, L3 of the parts 10 so that the end faces 11, 12 of the parts 10 are all entirely located on each side of the optical faces 31, 32 of the optical article 30.

Preferably, it is planned to let a non-zero gap between the end faces 11, 12 of the parts 10 and the optical faces 31, 32 of the optical article 30 (in the aforementioned virtual distribution), so that the entire main faces 21, 22 of the lens blank 20 can then be machined. This gap is for example selected between 0.1 and 1 mm.

In other words, this calculation operation is implemented such that the length of each part 10 is greater than or equal (preferably strictly greater) to the desired maximum thickness of the optical article 30 in the area where this part will be located (this maximum thickness being considered equal to the difference in height between the highest point of the upper optical face 32 and the lowest point of the lower optical face 31, in this area).

A final operation will consist in calculating the thicknesses of the shims necessary to hold the different parts 10.

During substep S12, the different parts 10 are manufactured. This can be carried out in very different ways.

Typically, the parts 10 can be manufactured by molding. In this case, various molds are used to respectively manufacture parts 10 of different lengths. In this embodiment, the mold selected to manufacture a part will be the one allowing a part to have a length as close as possible to the calculated length, but in general higher than it.

Alternatively, parts 10 could be made from a bar of desired section, by cutting it at the desired length. This bar could itself be obtained by molding.

Still as a variant, parts 10 could be produced by additive manufacturing, for example using a 3D printer. Indeed, some of the additive manufacturing methods can be performed on objects smaller than that of the optical article 30, but larger than that of a part 10. It is in this context that this kind of manufacturing method can be used.

The material used to manufacture the parts are the same as those known (glass, polycarbonate, etc.).

### - S2

During step S2), the parts are assembled and fixed together.

Different fixation processes could be used. Typically, the parts could be fixed by fusion, for example using a laser in this regard.

In a variant, some glue can be used to attach the parts 10 to each other. In this variant, an objective would be to ensure the glue not to form visible separations between the parts 10. To this end, the glue will be selected to have a refraction index equal or slightly lower than that of the parts 10. In a preferred embodiment, the ratio between the glue refraction index and the parts 10 refraction index lies between 83% and 100%.

In Figure 4 is shown a variant where the parts 10A, 10B are equipped with interlocking means making it possible to ensure a better assembly (the bonding surface being increased). These interlocking means comprise, on at least one part 10B, a protrusion 18 adapted to be engaged into a recess 19 provided in another part 10A.

In this variant, when the parts 10 are manufactured by molding or by cutting a bar, the parts will preferably all have identical sections. For example, each part 10 will have one, two or three protrusions and respectively one, two or three cavities distributed in its six sides. If the parts 10 are manufactured by cutting a bar, these protrusions and cavities will extend over the entire length of each part 10. When the parts 10 are manufactured by additive manufacturing, it will be possible to proceed differently, for example to provide protrusions and cavities only where this seems the most useful (for example on the periphery of the lens blank), and possibly only on a portion of the length of each part.

### - S3

During step S3, the two main faces 21, 22 of the lens blank 10 are machined.

This notion of machining could involve the surfacing, that is to say a machining of the main faces 21, 22 with substantial material removal, for example over 0.1 mm in at least an area of the lens blank 20.

In addition or as a variant, the machining could comprise the polishing of these main faces 21, 22, with a tool the grain of which is less than 3µm.

Preferably, a surfacing operation followed by a polishing operation will be carried out on each of the two main faces 21, 22 of the lens blank 22. But as a variant, ideally, when the parts 10 are manufactured by additive manufacturing, only one of the two main faces 21, 22 of the lens blank 20 could be machined, the other one having a perfect surface condition.

In any case, the obtained optical article 30 is formed of different parts 10 rigidly fixed to each other and arranged so that the lens can satisfy the optical function for which it was designed.

The edge of the optical article 30 can then be machined to present a circular outline. Alternatively, it could directly be machined to the shape of the frame rim outline.

### Other embodiments

The present invention is in no way limited to the embodiment described and shown in Figures 1 to 4.

For instance, the parts 10 used to manufacture one optical article 30 may be formed from distinct materials or may be manufactured according to various processes.

As a first example, if the lens to be manufactured is a progressive addition one, it is possible to use parts having various refraction indexes to form the far vision zone of the lens and the near vision zone. Thanks to this arrangement, it is possible to design progressive addition lenses having little thicknesses.

As a second example, some of the parts can present a front end face having a flat or convex shape, and other parts can present a front end face having several reliefs. The first parts would be arranged in the center and along the outline of the lens, and the other parts would be arranged between these first parts, along a circle. Such a lens would be designed to modify the natural evolution of an optical deficiency, here myopia. Such reliefs, having micro-lenses function, are described for instance in document WO2019166654.

In Figure 5, another embodiment is shown. In this embodiment, some of the parts 10C, 10D, 10E, 10F of the lens blank 20A have various shapes, depending on whether they are located around the center of the lens (their sections then being triangular), on a first ring around these triangular parts (their sections being trapezoidal), or on subsequent rings (their sections still being trapezoidal, but of increasing widths).

In Figure 6, another embodiment is shown. In this embodiment, all the parts 10 of the lens blank 20B have sections of different shapes.

Here, a central part 10G has a circular shape, an intermediate part 10H has an annular shape with an opening closed by the central part 10G, and an outer part 10J has an annular shape with an opening closed by both the central part 10G and the intermediate part 10H.

In this embodiment, the intermediate part 10H can for instance have a refraction index slightly higher than that of the central part 10G, and the outer part 10J can have a refraction index slightly higher than that of the intermediate part 10H. The opposite is conceivable. Thanks to this arrangement, it is possible to design lenses having little thicknesses.

## Claims

1. Method for manufacturing an optical article (30), comprising steps:
S1) of providing at least two distinct parts (10), each one having two end faces (11, 12),
S2) of assembling said at least two parts (10) so that their end faces (11, 12) form main faces (21, 22) for the assembling (20) of parts (10), and
S3) of machining at least one of said main faces (21, 22) to generate at least one optical face (31, 32) for the optical article (30).

2. Method according to claim 1, wherein step S3) comprises the machining of both main faces (21, 22) to generate two optical faces (31, 32) for the optical article (30).

3. Method according to claim 1 or 2, wherein said step S2) of assembling comprises a positioning of said at least two parts (10) relative to each other and a bonding of said at least two parts (10).

4. Method according to claim 3, wherein said at least two parts (10) are made of a material having a first refraction index and are bonded by means of a glue having a second refraction index, a ratio between said second and first refraction indexes lying between 83% and 100%.

5. Method according to claim 3, wherein said at least two parts (10) are bonded by fusion.

6. Method according to any one of claims 1 to 5, wherein the end faces (11, 12) of each part (10) are parallel.

7. Method according to any one of claims 1 to 6, wherein said two parts (10) have distinct lengths (L1, L2, L3), each length being measured between the end faces (11, 12) of the part (10).

8. Method according to claim 7, wherein said step S1) of providing comprises a sub-step S11) of calculating a length (L1, L2, L3) for each part (10) as a function of a desired shape for the optical faces (31, 32) of the optical article (30).

9. Method according to claim 8, wherein each length (L1, L2, L3) is calculated so that at least one point of each end face (11, 12) of the part (10) is located on one of the optical faces (31, 32) of the optical article (30), or at a distance from it that is fewer than a predetermined threshold.

10. Method according to any one of claims 1 to 9, wherein said at least two parts (10) have identical cross-sections, in a plane orthogonal to an axis passing through both end faces (11, 12) of one of said parts (10).

11. Method according to any one of claims 1 to 9, wherein said at least two parts (10C, 10D, 10E, 10F) have distinct cross-sections, in a plane orthogonal to an axis passing through both end faces (11, 12) of one of said parts (10C, 10D, 10E, 10F).

12. Method according to claim 11, wherein one part (10G) has a circular shape and at least one another part (10H, 10J) has an annular shape.

13. Method according to any one of claims 1 to 12, wherein one part (10A) has a recess, and another part (10B) has a protrusion that is engaged into said recess during said step S2) of assembling.

14. Method according to any one of claims 1 to 13, wherein said step S1) of providing comprises a sub-step S12) of manufacturing at least one part (10) by additive manufacturing or by molding or by cutting a template.

15. Method according to any one of claims 1 to 14, wherein said at least two parts (10) have distinct refraction indexes.

16. Method according to any one of claims 1 to 15, wherein said at least two parts (10) perform distinct optical functions.

17. Optical article (30) with two optical faces (31, 32) and comprising at least two distinct and assembled parts (10), each part (10) having two end faces (11, 12), the end faces (11, 12) of the parts (10) forming said optical faces (31, 32).
